# EUROPÄISCHE PATENTSCHRIFT

(11) **EP 1 047 886 B1**
(45) Veröffentlichungstag und Bekanntmachung des Hinweises auf die Patenterteilung: **02.07.2003**
(21) Anmeldenummer: 99902549.7
(22) Anmeldetag: 18.01.1999
(51) Int. Cl.: F16D 65/12, B60B 27/00

(54) **BREMSSCHEIBENANORDNUNG INSBESONDERE FÜR KRAFTFAHRZEUGE**
BRAKE DISC ASSEMBLY, ESPECIALLY FOR MOTOR VEHICLES
ENSEMBLE DISQUE DE FREIN NOTAMMENT POUR VEHICULES A MOTEUR

(30) Priorität: 21.01.1998 DE 19802040
(43) Veröffentlichungstag der Anmeldung: 02.11.2000
(73) Patentinhaber: Continental Teves AG & Co. oHG, 60488 Frankfurt (DE)
(72) Erfinder: BAUER, Jürgen, D-65187 Wiesbaden (DE); KEFERSTEIN, Hans-Georg, D-64291 Darmstadt (DE)
(86) Internationale Anmeldenummer: EP9900265
(87) Internationale Veröffentlichungsnummer: WO99037937

(56) Entgegenhaltungen:
- DE-A- 3 924 849
- US-A- 4 503 944
- PATENT ABSTRACTS OF JAPAN vol. 016, no. 149 (M-1234), 13. April 1992 & JP 04 005153 A (SUZUKI MOTOR), 9. Januar 1992

## Beschreibung

Die vorliegende Erfindung betrifft eine Bremsscheibenanordnung insbesondere für Kraftfahrzeuge mit einer Bremsscheibe, die wenigstens einen Reibring sowie ein topfförmiges Halteteil mit zumindest einer radial durchgehenden Öffnung aufweist. Dabei ist das Halteteil über einen Flansch an einer rotierenden Achse befestigt. Eine derartige Bremsscheibenanordnung ist aus Dokument JP-04 005 153 bekannt.

Eine weitere Bremsscheibenanordnung für Kraftfahrzeuge wird in der DE 43 14 311 A1 offenbart. Dort besitzt die einstückige Bremscheibe einen Reibring und einen damit verbundenen Bremsscheibentopf, der mittels Befestigungsschrauben am Flansch einer Radachse befestigt ist. Der äußere radiale Rand des Reibringes wird ebenso wie beiderseits des Reibringes angeordnete Bremsbeläge von einer Schwimmsattel-Scheibenbremse umgriffen. Hierbei sind die Bremsbeläge zumindest in Umfangrichtung zur Übertragung der Bremsumfangskräfte an einem in den Achsschenkel integrierten Bremsträger axial verschiebbar geführt und abgestützt. Im Falle von Wartungs- bzw. sonstigen Reparaturarbeiten an der Bremsscheibe oder der Scheibenbremse erweist es sich für eine derartige Bremsscheibenanordnung als außerordentlich schwierig die Bremsscheibe ohne allzu großen Montageaufwand vom Flansch der Fahrzeugachse zu entfernen. Zur Bremsscheibendemontage ist es für die beschriebene Anordnung erforderlich neben dem Fahrzeugrad zumindest den Bremssattel inklusive Bremsbelägen abzubauen bevor die Bremsscheibe frei zugänglich ist. Bei anderen Bauformen, bei denen der Bremsträger die Bremsscheibe nicht nur axial überragt sondern diese auch noch hintergreift, wird die Bremsscheibenmontage bzw. -demontage aufgrund des begrenzten Bauraumes zusätzlich erschwert oder sogar unmöglich gemacht. Speziell für eine Gestaltung des Bremsträgers mit komfortabler Lagerung und Abstützung der Bremsbeläge an den die Bremsscheibe hintergreifenden Bremsträgerarmen ist die Bremsscheibenmontage/demontage nicht möglich ohne auch den Bremsträger zu entfernen.

Ausgehend vom aufgeführten Stand der Technik besteht demnach die Aufgabe der Erfindung darin, eine Bremsscheibenanordnung mit einer an einem Flansch befestigten Bremsscheibe anzugeben, bei der eine einfache Montage bzw. Demontage der Bremsscheibe am Flansch ermöglicht wird.

Gelöst wird die Aufgabe durch die kennzeichnenden Merkmale des Patentanspruches 1. Die eigentliche Bremsscheibe wird insbesondere aus Kostengründen vorteilhaft als einstückiges Gußteil ausgeführt. Zur Vereinfachung der Bremsscheibenmontage/-demontage besitzt das Halteteil an einem parallel zur Bremsscheibenachse orientierten zylindrischen Abschnitt eine radial durchgehende Öffnung. Dadurch wird im Montageablauf die freie Bewegbarkeit der Bremsscheibe relativ zum Flansch entscheidend erhöht und erlaubt damit die günstige Bremsscheibenmontage/-demontage selbst bei ungünstigen Einbausituationen für die Bremsen- oder Bremsscheibenanordnung.

Gemäß der Erfindung ist die Bremsscheibe während der Montage/Demontage derart beweglich am achsfesten Flansch angeordnet, daß der Flansch die Öffnung im Halteteil infolge einer radialen Relativverschiebung der Bremsscheibe zum Flansch zumindest abschnittsweise radial von innen nach außen durchragt. Dadurch wird das Maß der Beweglichkeit der Bremsscheibe gegenüber dem Flansch erhöht und gestattet die einfache Bremsscheibenmontage/-demontage je nach Ausführung unter Umständen ohne Ausbau des den radial äußeren Bremsscheibenrand übergreifenden Bremssattels oder aber des Bremsträgers. Insbesondere für solche Bremsentypen, bei denen der Bremssträger in den Achsschenkel des Fahrzeuges integriert ist und bei denen die Bremsscheibe von Bremsträgerarmen nicht nur radial überragt sondern auch axial hintergriffen wird, wird durch die Öffnung im Halteteil überhaupt erst eine Bremsscheibenmontage/-demontage bei geringem Aufwand ermöglicht. Erst dadurch wird beispielsweise die Realisierung gezogen am Bremsträger abgestützter Bremsbacken für Bauformen gestattet, bei denen der zur Abstützung und Führung der Bremsbacken dienende Bremsträger in den fahrzeugfesten Achsschenkel integriert ist. Die einfache Bremsscheibenmontage bzw. -demontage bleibt dabei nach wie vor erhalten.

In einer weiteren Variante der Bremsscheibenanordnung besitzt das topfförmige Halteteil der Bremsscheibe einen senkrecht zur Bremsscheibenachse orientierten Befestigungsabschnitt mit einem zentrischen Durchgangsloch, wobei am Durchgangsloch an in Umfangsrichtung gleicher Position wie bei der Öffnung im zylindrischen Abschnitt eine radiale Ausnehmung vorgesehen ist. Besonders günstig hat die Ausnehmung die Kontur eines Kreisbogens und vergrößert damit die radiale Verschiebemöglichkeit der Bremsscheibe gegenüber dem Flansch während der Montage.

In einer anderen vorteilhaften Ausführung wird die Bremsscheibe unter Einsatz eines getrennt montierbaren/demontierbaren Zentrierringes gegenüber dem Flansch bezüglich der Bremsscheibenachse zentriert. Die Zentrierring liegt dabei an entsprechenden Zentrierflächen des Flansches sowie der Bremsscheibe an und sorgt für die gewünschte Positionierung der Bremsscheibe. Dadurch wird zum einen die wuchtfreie Rotation der Bremsscheibe gewährleistet und zum anderen durch die eigenständige Montierbarkeit des Zentrierringes die Bremsscheibenmontage/-demontage weiter vereinfacht insbesondere bei korrodierten Bremsscheiben. Zur günstigen Demontage des Zentrierringes besitzt dieser wenigstens eine Gewindebohrung oder eine sonstige Vorrichtung beispielsweise zum Ansatz eines geeigneten Werkzeuges zum Abziehen des Zentrierringes vom Flansch bzw. der Bremsscheibe.

Bevorzugt besitzt der Flansch eine polygonförmige oder mehreckige Gestalt, wobei die Anzahl der Ecken insbesondere mit der Anzahl der zur Bremsscheibenbefestigung verwendeten Radschrauben übereinstimmt. Während des Montageablaufes der Bremsscheibe taucht zumindest eine dieser Flanschecken in die Öffnung des topfförmigen Halteteiles und erlaubt dadurch die erforderliche radiale Relativverschiebung der Bremsscheibe zum Flansch ohne notwendigerweise die Bremsscheibe zunächst auch axial vom Flansch abziehen zu müssen.

Ausführungsbeispiele der Erfindung werden anhand der Zeichnung dargestellt und im folgenden näher erläutert.

### Innerhalb der Zeichnung zeigt:

- Fig. 1: eine geschnittene Seitenansicht einer komplett montierten Bremsscheibenanordnung mit Radfelge,
- Fig. 2: eine räumliche Ansicht der Einzelkomponenten der Bremsscheibenanordnung aus Figur 1,
- Fig. 3: eine räumliche Ansicht einer Bremsscheibe mit einem achsfesten Flansch in einer Montageposition,
- Fig. 4: eine räumliche Ansicht einer weiteren Variante der Bremsscheibenanordnung,
- Fig. 5-6: zwei Varianten der Bremsscheibenanordnung in Montageposition in einer schematischen Darstellung.

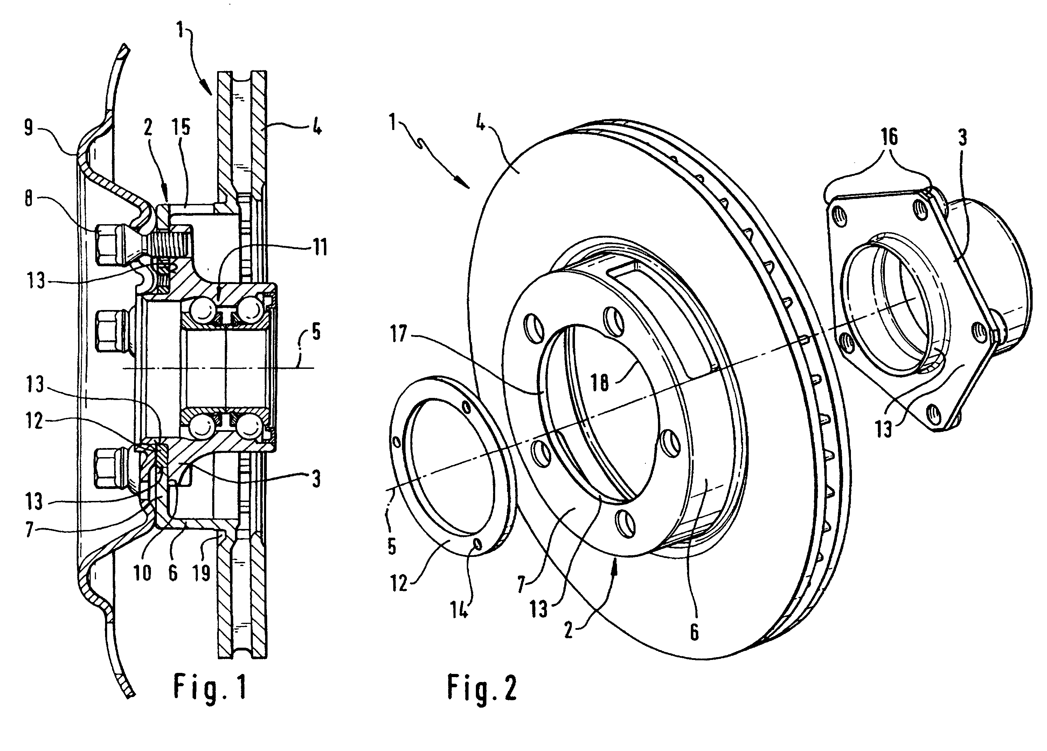

Die in den Figuren 1 und 2 gezeigte Bremsscheibenanordnung besitzt eine Bremsscheibe 1, die über ein topfförmiges Halteteil 2 am Flansch 3 einer Kraftfahrzeugachse befestigt ist. üblicherweise wird die einstückige Bremsscheibe 1 durch Gießen hergestellt und weist in der Regel zumindest einen Reibring 4 sowie eine damit verbndenes topfförmiges Halteteil 2 auf. Für den grundlegenden Erfindungsgedanken ist es jedoch unerheblich, ob Halteteil 2 und Reibring 4 einstückig miteinander verbunden sind oder nicht. Das Halteteil 2 besteht aus einem parallel zur Bremsscheibenachse 5 verlaufenden zylindrischen Abschnitt 6 sowie einem senkrecht zur Bremsscheibenachse 5 orientierten Befestigungsabschnitt 7. Mit dem Befestigungsabschnitt 7 wird die Bremsscheibe 1 durch die Radschrauben 8 bzw. Radmuttern über die Radfelge 9 gegenüber der Flanschanlage 10 axial verspannt und damit drehfest an der nicht gezeigten Fahrzeugachse fixiert. Innerhalb der dargestellten Ausführung ist besonders vorteilhaft auch noch das Radlager 11 in den Flansch 3 integriert, was jedoch für die Erfindung unbedeutsam ist. Zur Gewährleistung einer exakten Positionierung der Bremsscheibe 1 am Flansch 3 sowie einer wuchtfreien Rotation der Bremsscheibe 1 ist diese gegenüber dem Flansch 3 mittels eines zentrierringes 12 zentriert. Der Zentrierring 12 liegt im eingebauten Zustand an entsprechenden Zentrierflächen 13 sowohl der Bremsscheibe 1 als auch des Flansches 3 an und sorgt damit für die maßgenaue Positionierung. Wie insbesondere Figur 2 zu entnehmen ist, verfügt der Zentrierring 12 über zumindest eine jedoch vorzugsweise mehrere Gewindebohrungen 14 zum ansetzen geeigneter Werkzeuge mittels derer sich der Zentrierring 12 separat und damit unabhängig von der Bremsscheibe 1 vom Flansch 3 demontieren läßt. Selbstverständlich sind analog zur Ausführung der Gewindebohrungen 14 auch andere Maßnahmen am Zentrierring 12 möglich, die beispielweise mit Werkzeugeinsatz dessen Demontierbarkeit erlauben.

Zur Erleichterung der Montage bzw. Demontage der Bremsscheibe 1 insbesondere bei ungünstigen Einbausituationen für die Bremsscheibenanordnung besitzt das topfförmige Halteteil 2 an seinem zylindrischen Abschnitt 6 zumindest eine radial durchgehende Öffnung 15. Vorzugsweise sind zur Vermeidung einer Unwucht an der Bremsscheibe 1 zwei gleich dimensionierte, einander gegenüberliegende Öffnungen 15 vorgesehen. Infolge der Öffnungen 15 läßt sich bei enfernter Radfelge 9, entfernten Radschrauben 8 sowie bereits entnommenem Zentrierring 12 die Bremsscheibe 1 relativ zum Flansch 3 radial derart bewegen, daß der Flansch 3 zumindest abschnittsweise in eine der Öffnungen 15 eintaucht. Das Maß der Radialverschiebung der Bremsscheibe 1 reicht dabei unter Umständen aus die Montage/Demontage der Bremsscheibe 1 durchzuführen ohne den den Bremsscheibenrand überragenden Bremssattel entfernen zu müssen. Des weiteren wird erreicht einen den Bremsscheibenrand übergreifenden, nicht gezeigten Bremsträger, der zur Abstützung und Lagerung der Bremsbeläge vorgesehen ist, während der Bremsscheibenmontage/-demontage in seiner Einbauposition zu belassen. Es wird ferner durch die erfindungsgemäßen Maßnahmen gestattet in den Achsschenkel integrierte Bremsträger-Bauformen zu realisieren, die den äußeren Bremsscheibenrand nicht nur überragen sondern auch noch hintergreifen und für die dennoch eine einfache Bremsscheibenmontage/-demontage möglich ist.

Figur 2 sind noch einmal die einzelnen Komponenten der Bremsscheibenanordnung zu entnehmen, wobei deutlich erkennbar ist, daß der Zentrierring 12 mittels der Gewindebohrungen 14 eigenständig demontierbar ist und axial entnommen werden kann. Erst nach Entnahme des Zentrierringes 12 entsteht das nötige Radialspiel zwischen Befestigungsabschnitt 7 und Flansch 3, das die erwähnte Radialverschiebung der Bremsscheibe 1 zuläßt. Weiterhin weist der Flansch vorzugsweise eine mehreckige oder polygonförmige Kontur auf, wobei die Anzahl der Flanschecken 16 mit der Anzahl der verwendeten Radschrauben 8 bzw. Radmuttern übereinstimmt. Während des Montageablaufes der Bremsscheibe 1 durchragt eine dieser Flanschecken 16 die Öffnung 15.

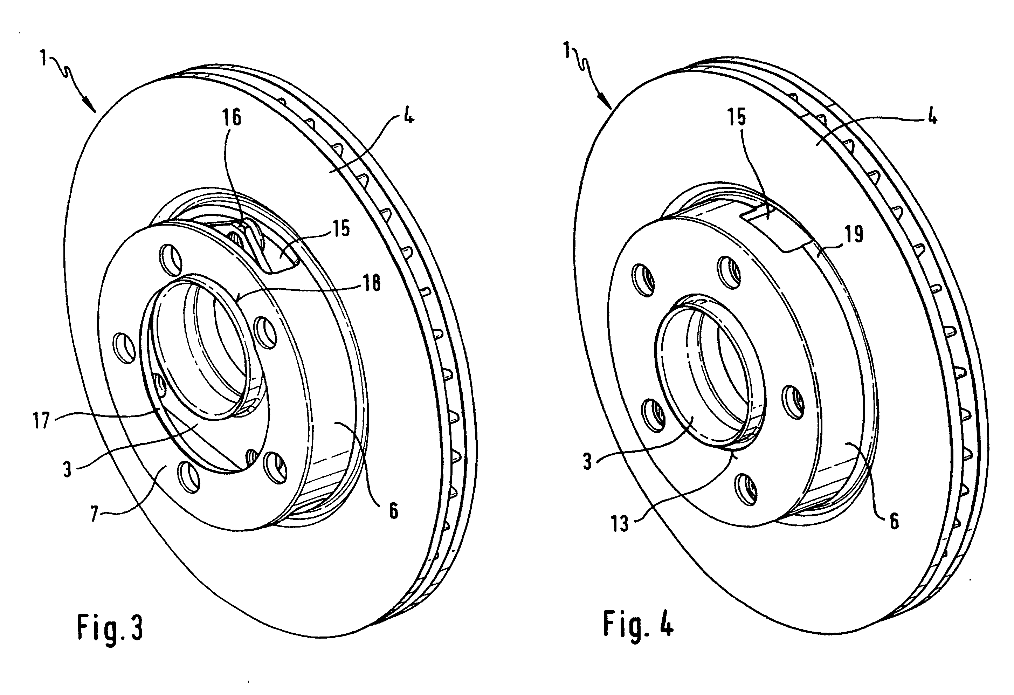

Die Montageposition der Bremsscheibenanordnung ist in Figur 3 dagestellt. Der vorher noch zwischen Flansch 3 und Befestigungsabschnitt 7 angeordnete zentrierring ist bereits axial entnommen und die Bremsscheibe 1 ist gegenüber dem Flansch 3 radial so weit verschoben, das eine Flanschecke 16 in die Öffnung 14 des zylindrischen Halteteilabschnittes 6 eintaucht. Zur Vergrößerung der radialen Verschiebbarkeit der Bremsscheibe 1 ist zusätzlich an einem axialen Durchgangsloch 17 des Befestigungsabschnittes 7, in das sich der Flansch 3 im Einbauzustand teilweise erstreckt, eine radiale Ausnehmung 18 vorgesehen (siehe auch Figur 2). Diese Ausnehmung 18 ist in Umfangsrichtung vorteilhaft an gleicher Position wie die Öffnung 14 im zylindrischen Halteteilabschnitt 6 angeordnet. Nachdem eine der Flanschecken 16 ausreichend tief in die Öffnung 14 radial eingetaucht ist, läßt sich die Bremsscheibe 1 mühelos durch eine Schwenkbewegung demontieren, ohne weitere Komponenten der Fahrzeugbremse (z. B. Bremssattel, Bremsträger) entfernen zu müssen.

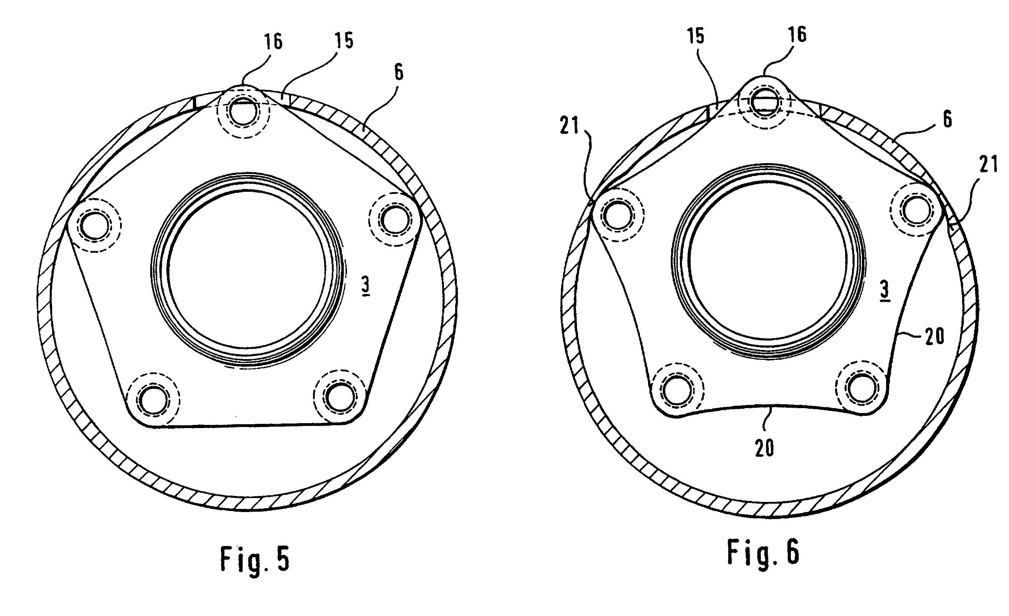

Figur 4 zeigt eine weitere Variante der Bremsscheibenanordnung, wobei aus Gründen der Bauteilreduzierung auf die Verwendung eines zusätzlichen Zentrierringes gemäß Figur 2 verzichtet wurde. Die Zentrierung der Bremsscheibe 1 erfolgt hier durch entsprechende Zentrierflächen 13 unmittelbar am Flansch 3. Zur Beibehaltung der einfachen Montage erstreckt sich die Öffnung 15 axial bis in eine Schirmungsnut 19, die eine übermäßige Schirmung der Reibringe 4 infolge thermischer Belastung vermeiden soll. Dadurch kann die axiale Montage/Demontage der Bremsscheibe mittels einer Schwenkbewegung in bekannter Weise durchgeführt werden.

In den Figuren 5 und 6 sind schematische Darstellungen der Montageposition des Flansches 3 innerhalb des zylindrischen Halteteilabschnittes 6 gezeigt. Der zylindrische Halteteilabschnitt 6 ist dabei so weit radial gegenüber dem Flansch 3 verschoben, daß eine Flanschecke 16 die Öffnung 15 im Halteteil durchragt. Es ist in den Figuren zu erkennen, daß das Maß der maximalen Radialverschiebung der Bremsscheibe einerseits durch die Innenabmessungen des zylindrischen Abschnittes 6 und andererseits durch die Abmessungen bzw. die geometrische Gestaltung des Flansches begrenzt wird. Eine Vergrößerung der radialen Relativverschiebung zwischen Flansch 3 und Bremsscheibe 1 läßt sich gemäß Figur 6 beispielsweise dadurch erreichen, daß die Flanken 20 des mehreckigen oder polygonförmigen Flansches eine konkave Wölbung aufweisen. Damit ist es möglich die Eintauchtiefe der Flanschecke 16 innerhalb der Öffnung 15 zu erhöhen. Darüber hinaus wird vorgeschlagen an der Innenkontur des zylindrischen Halteteilabschnittes 6 entsprechend der Flanschkontur an geeigneten Stellen Einbuchtungen 21 bzw. weitere radial durchgehende Öffnungen vorzusehen. Dies kann selbstverständlich nur insoweit erfolgen, als das Halteteil in seinem Materialquerschnitt dadurch nicht unzulässig geschwächt wird.

Es sei an dieser Stelle darauf hingewiesen, daß der erfinderische Grundgedanke nicht auf die innerhalb der Zeichnung dargestellten Ausführungsbeispiele beschränkt ist. Es lassen sich beispielsweise auch andere Flanschgeometrien umsetzen, die die erforderliche Radialverschiebung der Bremsscheibe während ihrer Montage/Demontage zulassen.

## Patentansprüche

1. Bremsscheibenanordnung insbesondere für Kraftfahrzeuge mit einer Bremsscheibe (1), die zumindest einen Reibring (4) und ein im wesentlichen topfförmiges Halteteil (2) aufweist, und mit einem Flansch (3), an dem die Bremsscheibe (1) über das topfförmige Halteteil (2) lösbar befestigt ist, wobei das Halteteil (2) einen parallel zur Bremsscheibenachse (5) verlaufenden zylindrischen Abschnitt (6) besitzt, der zumindest eine radial durchgehende Öffnung (15) aufweist, **dadurch gekennzeichnet, daß** die Bremsscheibe (1) im Montage- bzw. Demontagezustand derart beweglich am Flansch (3) angeordnet ist, daß der Flansch (3), infolge einer radialen Relativverschiebung der Bremsscheibe (1) zum Flansch (3), die Öffnung (15) im Halteteil (2) zumindest abschnittsweise durchragt.

2. Bremsscheibenanordnung nach Anspruch 1, **dadurch gekennzeichnet, daß** das topfförmige Halteteil (2) der Bremsscheibe (1) einen senkrecht zur Bremsscheibenachse (5) orientierten Befestigungsabschnitt (7) besitzt mit einem zentrischen Durchgangsloch (17), wobei der Befestigungsabschnitt (7) an in Umfangsrichtung gleicher Position wie die Öffnung (15) im zylindrischen Abschnitt (6) eine radiale Ausnehmung (18) im Durchgangsloch (17) aufweist.

3. Bremsscheibenanordnung nach einem der vorhergehenden Ansprüche, **dadurch gekennzeichnet, daß** zur Zentrierung der Bremsscheibe (1) am Flansch (3) ein Zentrierring (12) vorgesehen ist, der an entsprechenden Zentrierflächen (13) der Bremsscheibe (1) und des Flansches (3) zur Anlage kommt.

4. Bremsscheibenanordnung nach Anspruch 3, **dadurch gekennzeichnet, daß** der Zentrierring (12) zumindest eine dem Flansch (3) abgewandte Gewindebohrung (14) aufweist.

5. Bremsscheibenanordnung nach einem der vorhergehenden Ansprüche, **dadurch gekennzeichnet, daß** der Flansch (3) mehreckig bzw. polygonförmig gestaltet ist.

6. Bremsscheibenanordnung nach Anspruch 5, **dadurch gekennzeichnet, daß** die Flanken (20) des mehreckigen bzw. polygonförmigen Flansches (3) eine konkave Wölbung aufweisen.

## Claims

1. Brake disc assembly, especially for motor vehicles with a brake disc (1) including at least one friction ring (4) and a substantially bowl-shaped holding member (2), and with a flange (3) at which the brake disc (1) is detachably fastened by way of the bowl-shaped holding member (2), said holding member (2) having a cylindrical portion (6) that extends in parallel to the brake disc axis (5) and includes at least one radially continuous opening (15),
**characterized in that** the brake disc (1) in the assembled and disassembled condition is arranged on the flange (3) to be so movable that the flange (3), due to a radial displacement of the brake disc (1) relative to the flange (3), extends through the opening (15) in the holding member (2) at least in a section-by-section manner.

2. Brake disc assembly as claimed in claim 1,
**characterized in that** the bowl-shaped holding member (2) of the brake disc (1) comprises a fastening portion (7) that is oriented vertically to the brake disc axis (5) and has a centric through bore (17), the said fastening portion (7) having a radial recess (18) in the through bore (17) at the same position in a circumferential direction as the opening (15) in the cylindrical portion (6).

3. Brake disc assembly as claimed in any one of the preceding claims,
**characterized in that** for centering the brake disc (1) at the flange (3), there is provision of a centering ring (12) that moves into abutment on corresponding centering surfaces (13) of the brake disc (1) and the flange (3).

4. Brake disc assembly as claimed in claim 3,
**characterized in that** the centering ring (12) includes at least one threaded bore (14) remote from the flange (3).

5. Brake disc assembly as claimed in any one of the preceding claims,
**characterized in that** the flange (3) has a polygonal configuration.

6. Brake disc assembly as claimed in claim 5,
**characterized in that** the flanks (20) of the polygonal flange (3) have a concave curvature.

## Revendications

1. Ensemble disque de frein, en particulier pour véhicules automobiles, avec un disque de frein (1) qui comporte au moins un anneau de friction (4) et un élément de maintien sensiblement en forme de pot, et avec une bride (3) sur laquelle le disque de frein (1) est fixé de manière séparable par l'intermédiaire de l'élément de maintien (2) en forme de pot, l'élément de maintien (2) possédant une portion (6) cylindrique s'étendant parallèlement à l'axe (5) du disque de frein et qui présente au moins une ouverture (15) continue radialement, **caractérisé en ce que** le disque de frein (1) à l'état de montage ou démontage, est disposé déplaçable sur la bride (3), de manière que, par suite d'un coulissement relatif radial du disque de frein (1) par rapport à la bride (3), la bride (3) traverse au moins en partie l'ouverture (15) dans l'élément de maintien (2).

2. Ensemble disque de frein selon la revendication 1, **caractérisé en ce que** l'élément de maintien (2) en forme de pot du disque de frein (1) possède une portion de fixation (7) orientée perpendiculairement à l'axe (5) du disque de frein, avec un trou traversant (17) centré, la portion de fixation (7) présentant un évidement (18) radial dans le trou traversant (17), à la même position, dans la direction périphérique, que l'ouverture (15) dans la portion cylindrique (6).

3. Ensemble disque de frein selon l'une des revendications précédentes, **caractérisé en ce que** pour le centrage du disque de frein (1) sur la bride (3), il est prévu une bague de centrage (12) qui vient s'appliquer contre des surfaces de centrage (13) correspondantes du disque de frein (1) et de la bride (3).

4. Ensemble disque de frein selon la revendication 3, **caractérisé en ce que** la bague de centrage (12) présente au moins un trou taraudé (14) tourné à l'opposé de la bride (3).

5. Ensemble disque de frein selon l'une des revendications précédentes, **caractérisé en ce que** la bride (3) est polygonale.

6. Ensemble disque de frein selon la revendication 5, **caractérisé en ce que** les flancs (20) de la bride (3) polygonale présentent une courbure concave.
